# EUROPEAN PATENT SPECIFICATION

(11) **EP 2 930 898 B1**
(45) Date of publication and mention of the grant of the patent: **25.04.2018**
(21) Application number: 13859664.8
(22) Date of filing: 11.07.2013
(51) Int. Cl.: H04L 12/28, H04M 1/60

(54) **METHOD FOR SHARING FILE AND HANDHELD DEVICE**
VERFAHREN ZUR GEMEINSAMEN DATEINUTZUNG UND TRAGBARE VORRICHTUNG
PROCÉDÉ DE PARTAGE DE FICHIERS ET DISPOSITIF PORTATIF

(30) Priority: 06.12.2012 CN 201210525915
(43) Date of publication of application: 14.10.2015
(73) Proprietor: Huizhou TCL Mobile Communication Co., Ltd., Huizhou, Guangdong 516006 (CN)
(72) Inventor: CAI, Wendi, Huizhou Guangdong 516006 (CN)
(74) Representative: ZHAOffice SPRL
(86) International application number: PCT/CN2013/079213
(87) International publication number: WO 2014/086145

(56) References cited:
- EP-A2- 1 933 243
- EP-A2- 2 226 972
- WO-A1-2011/049490
- CN-A- 102 244 676
- CN-A- 102 508 596
- CN-A- 102 572 096
- CN-A- 103 036 962

## Description

The present disclosure relates to the technical field of digital living network technologies, and more particularly to a file sharing method according to the preamble of claim 1 and a handheld apparatus according to the preamble of claim 6

DLNA (Digital Living Network Alliance) is a kind of network information technology that allows for interconnection and intercommunication among a variety of mobile apparatuses via a wireless network so as to achieve the purpose of unlimited sharing of files. The DLNA allows various mobile apparatuses such as mobile phones, computers and television (TV) sets to intelligently communicate shared files with each other via a wireless network. In this way, screens of the various mobile apparatuses can be shared in real time for purpose of entertainment and cooperation among a plurality of users.

In the conventional arts, when employing the DLNA technology to share a file, it requires the user to enter operation directories with multiple levels sequentially, and then search for DLNA apparatuses that are in a connected status via the wireless network, in order to connect the handheld apparatus with a target DLNA apparatus. Moreover, even after connecting, multiple operations on the DLNA apparatus must be done to acquire a filename of the shared file before sharing the information. Obviously, the conventional art employing the DLNA technology to share the file, needs complex operation steps, and tends to cause error in operation.

Accordingly, a need exists in the art to provide a file sharing method and a handheld apparatus that can solve the aforesaid problems.

EP 2 226 972 discloses a Digital Living Network Alliance (DLNA) system and method of providing content therein are provided. A legacy media player displays a content for content stored in the legacy media player or in an add-in server, and when a content item is selected from the list, the legacy media player determines whether the content item is reproducible by a registered digital media renderer. If the selected content item is reproducible by the registered digital media renderer, the legacy media player transmits a reproducing request for the selected content item, and the corresponding digital media renderer receives and reproduces the selected content.

EP 1 933 243 discloses an apparatus, method, and medium for providing a user interface for file transmission. The apparatus includes a motion perception (recognition) module perceiving (recognizing) a motion input to the user interface and identifying a position of the perceived (recognized) motion; a motion execution module executing a motion corresponding to the perceived motion and the identified position of the perceived motion and the identified position of the perceived motion and modifying components of the user interface according to the executed motion; and a communication module transmitting a file to a transmission target based on the perceived motion and the identified position of the perceived motion.

A main technical problem to be solved in the present disclosure is to provide a file sharing method and a handheld apparatus, which can achieve quick sharing of files, and simple operations and high accuracy.

To solve the aforesaid technical problem, a technical solution adopted in the present disclosure is to provide a file sharing method according to claim 1. The method comprises: after a handheld apparatus entering a DLNA network, acquiring information of available DLNA apparatuses that are in a connected status in the DLNA network by a DLNA module, to form a DLNA apparatus shortcut list; dragging a shared file onto an icon of a target DLNA apparatus in the DLNA apparatus shortcut list, wherein the DLNA apparatus shortcut list comprises at least one icon of at least one DLNA apparatus; matching a type of the target DLNA apparatus with a type of the shared file by the DLNA module; and enabling the target DLNA apparatus to process the shared file by the handheld apparatus if matching successfully.

The step of the handheld apparatus entering the DLNA network comprises: activating a WIFI function by the handheld apparatus to search for and enter a wireless network; and activating an upper-layer application by the DLNA module to enter the DLNA network.

The step of acquiring information of available DLNA apparatuses that are in a connected status in the DLNA network by the DLNA module to form the DLNA apparatus shortcut list comprises: adding the handheld apparatus into a DLNA sharing apparatus group in a wireless network by a lower-layer service component of the DLNA module, and acquiring the information of the available DLNA apparatuses that are in a connected status in the DLNA network to form the DLNA apparatus shortcut list.

The step of dragging the shared file onto the icon of the target DLNA apparatus in the DLNA apparatus shortcut list comprises: entering a file library of the handheld apparatus, and dragging the shared file towards a status bar of the handheld apparatus; calling the DLNA apparatus shortcut list from a lower-layer service component by an upper-layer application and displaying the DLNA apparatus shortcut list in the form of a DLNA apparatus list shortcut menu bar; and dragging the shared file onto the icon of the target DLNA apparatus in the DLNA apparatus shortcut menu bar.

The step of enabling the target DLNA apparatus to process the shared file by the handheld apparatus comprises: receiving an instruction of pulling down a status bar by the handheld apparatus, and displaying a handheld apparatus shortcut menu bar according to the instruction; calling the DLNA apparatus shortcut list from a lower-layer service component by an upper-layer application via clicking an icon of the upper-layer application in the handheld apparatus shortcut menu bar, and displaying the DLNA apparatus shortcut list in the form of a DLNA apparatus list shortcut menu bar; entering an operation interface of the target DLNA apparatus by clicking the icon of the target DLNA apparatus in the DLNA apparatus shortcut menu bar; and processing the shared file via the operation interface of the target DLNA apparatus displayed by the handheld apparatus.

The step of enabling the target DLNA apparatus to process the shared file by the handheld apparatus comprises: calling an upper-layer application by the handheld apparatus and entering a main interface of the upper-layer application, wherein the DLNA apparatus shortcut list is displayed in the main interface; entering an operation interface of the target DLNA apparatus by clicking the icon of the target DLNA apparatus in the DLNA apparatus shortcut list; and processing the shared file via the operation interface of the target DLNA apparatus displayed by the handheld apparatus.

To solve the aforesaid technical problem, another technical solution adopted in the present disclosure is to provide a handheld apparatus according to claim 6 for sharing a file, which shares the file via a wireless network. The handheld apparatus comprises: a DLNA module, being configured to acquire information of available DLNA apparatuses that are in a connected status in the DLNA network to form a DLNA apparatus shortcut list after the handheld apparatus enters a DLNA network; a display module, being configured to display the DLNA apparatus shortcut list and receive an instruction of dragging the shared file onto an icon of a target DLNA apparatus in the DLNA apparatus shortcut list, and display a corresponding animation according to the instruction, wherein the DLNA apparatus shortcut list comprises at least one icon of at least one DLNA apparatus icon; the DLNA module is further configured to match a type of the target DLNA apparatus with a type of the shared file; and a shortcut operation module, being configured to enable the target DLNA apparatus to process the shared file after matching successfully.

The handheld apparatus further comprises a WIFI module, which is configured to activate a WIFI function to search for and enter a wireless network; and the DLNA module activates an upper-layer application to enter the DLNA network.

The DLNA module further comprises a lower-layer service component. The lower-layer service component is configured to add the handheld apparatus into a DLNA sharing apparatus group in the wireless network, and acquire the DLNA apparatus shortcut list from the wireless network, and the upper-layer application is configured to call the DLNA apparatus shortcut list from the lower-layer service component.

The handheld apparatus further comprises a shortcut menu bar module, which is configured to form a DLNA apparatus list shortcut menu bar according to the DLNA apparatus shortcut list called by the upper-layer application of the DLNA module.

The present disclosure has the following benefits: different from the prior art, the present disclosure can search for DLNA apparatuses that are in a connected status in the DLNA network via the handheld apparatus, display the corresponding DLNA apparatus information in the DLNA apparatus shortcut list, and then drag a file to be shared onto an icon of a corresponding DLNA apparatus in the DLNA apparatus shortcut list, thus achieving the playing or sending of the shared file. The present disclosure can achieve quick sharing of files, and simple operations and high accuracy.

### BRIEF DESCRIPTION OF THE DRAWINGS

FIG. 1 is a flowchart diagram illustrating a file sharing method according to an embodiment of the present disclosure;
FIG. 2 is a schematic view illustrating the animation of dragging a shared file to a DLNA apparatus shortcut list according to the present disclosure;
FIG. 3 is a diagram illustrating the correspondence relationship between a target DLNA apparatus and shared files according to the present disclosure;
FIG. 4 is a first schematic view illustrating the process of operating a target DLNA apparatus to process a shared file of the present disclosure;
FIG. 5 is a second schematic view illustrating the process of operating a target DLNA apparatus to process a shared file of the present disclosure; and
FIG. 6 is a schematic structural view of a handheld apparatus according to an embodiment of the present disclosure.

### DETAILED DESCRIPTION OF THE INVENTION

The present disclosure will be detailed hereinbelow with reference to the attached drawings and the embodiments.

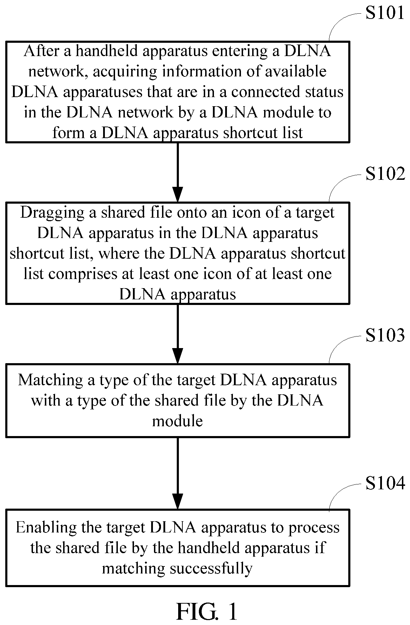

FIG. 1 is a flowchart diagram illustrating a file sharing method according to an embodiment of the present disclosure. As shown in FIG. 1, the file sharing method of this embodiment comprises following steps of:
Step S101: after a handheld apparatus entering a DLNA network, acquiring information of available DLNA apparatuses that are in a connected status in the DLNA network by a DLNA module to form a DLNA apparatus shortcut list.

In this embodiment, the handheld apparatus is preferably an intelligent touch screen mobile phone. A user activates a WIFI function of the handheld apparatus to search for and enter a wireless network via the intelligent touch screen of the handheld apparatus. After that, the user activates an upper-layer application via a DLNA module to enter the DLNA network.

After the handheld apparatus enters the DLNA network, a lower-layer service component of the DLNA module automatically adds the handheld apparatus into a DLNA sharing apparatus group in the wireless network, and acquires information of available DLNA apparatuses that are in a connected status in the DLNA network to form a DLNA apparatus shortcut list.

In this embodiment, the DLNA apparatus is any of a variety of media playing and processing apparatuses such as mobile phones, computers, TV sets and sound boxes.

Step S102: dragging a shared file onto an icon of a target DLNA apparatus in the DLNA apparatus shortcut list.

The DLNA apparatus shortcut list comprises at least one icon of at least one DLNA apparatus that corresponds to the DLNA apparatus, and the icon of the DLNA apparatus is formed according to the DLNA apparatus information corresponding to available DLNA apparatuses that are in a connected status in the DLNA network.

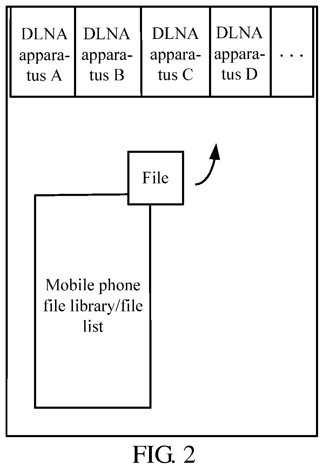

After entering a file library or a media library of the handheld apparatus, the user clicks a shared file and then drags the shared file towards a status bar on a screen of the handheld apparatus (as shown in FIG. 2). Then, the DLNA module of the handheld apparatus automatically activates an upper-layer application, calls the DLNA apparatus shortcut list from a lower-layer service component and displays the DLNA apparatus shortcut list on the screen in the form of a DLNA apparatus list shortcut menu bar. The user drags the shared file onto an icon of a target DLNA apparatus in the DLNA apparatus shortcut menu bar and then releases it so that the target DLNA apparatus that is going to process the shared file is selected.

Step S103: matching a type of the target DLNA apparatus with a type of the shared file by the DLNA module.

After the user drags the shared file onto the icon of the target DLNA apparatus in the DLNA apparatus shortcut menu bar, the shared file will not be immediately processed by the target DLNA apparatus. Generally speaking, before dragging the file, the user purposefully selects the icon of the target DLNA apparatus that is capable of processing the shared file according to the type of the shared file. However, in the actual operation, the user might accidentally drag the shared file onto the icon of the target DLNA apparatus that is incapable of processing the shared file because of various maloperations, which can prevent the user from experiencing the convenience brought by the file sharing. For example, when the user drags a video file onto an icon corresponding to the sound box, the video file can not be played by the sound box.

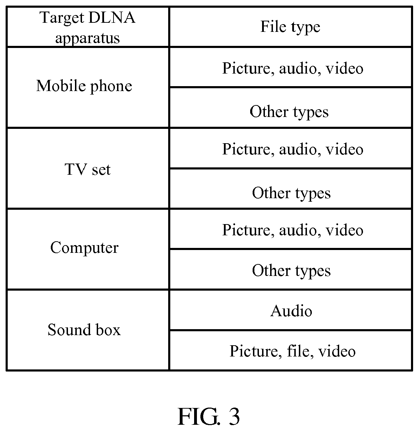

Therefore, it is necessary to provide a DLNA module to match the type of the target DLNA apparatus with the type of the shared file in this embodiment. Correspondingly, in the present embodiment, the correspondence relationship between the type of the target DLNA apparatus and the type of the shared file may be preset in the handheld apparatus, as shown in FIG. 3. It should be appreciated that, the correspondence relationship of this embodiment is not limited to what is shown in FIG. 3.

Step S104: enabling the target DLNA apparatus to process the shared file by the handheld apparatus if matching successfully.

In this embodiment, if the DLNA module matches the type of the target DLNA apparatus with the type of the shared file successfully according to the correspondence relationship shown in FIG. 3, that is, if it is determined that the target DLNA apparatus is capable of processing the shared file that is dragged, then the target DLNA apparatus processes the shared file according to the type of the shared file. The processing includes playing the shared file and sending the shared file.

If matching of the type of the DLNA apparatus with the type of the shared file the by DLNA module fails, that is, if it is determined that the target DLNA apparatus is incapable of processing the shared file that is dragged, then a prompt window can be displayed on the screen of the handheld apparatus to remind the user to reselect a target DLNA apparatus that is capable of processing the shared file.

It should be appreciated that, in this embodiment, the user may operate the target DLNA apparatus to process the shared file that is dragged in two ways.

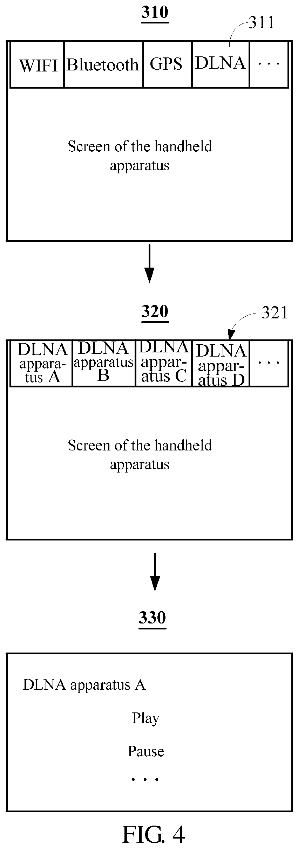

FIG. 4 is a first schematic view illustrating the process of operating a target DLNA apparatus to process a shared file according to the present disclosure. As shown in FIG. 4, the user pulls down the status bar on the touch screen of the handheld apparatus. Then, the handheld apparatus receives the instruction of pulling down the status bar, and displays a handheld apparatus shortcut menu bar according to the instruction, and thus enters a handheld apparatus shortcut menu bar interface 310 having an icon 311 of a DLNA upper-layer application. The handheld apparatus shortcut menu bar interface 310 is similar to a shortcut menu bar interface for operating the WIFI, the Bluetooth, or the GPS in an Android apparatus. After that, when the user clicks the icon 311 of the DLNA upper-layer application, the upper-layer application calls the DLNA apparatus shortcut list from the lower-layer service component, and displays the DLNA apparatus shortcut list in the form of a DLNA apparatus list shortcut menu bar (i.e., a DLNA apparatus list shortcut menu bar 321 in an interface 320).

Then, the user enters an operation interface 330 of the target DLNA apparatus by clicking the icon of the target DLNA apparatus in the DLNA apparatus shortcut menu bar. Then, the user can process the shared file that is dragged via the operation interface 330 of the target DLNA apparatus that is displayed on the screen of the handheld apparatus, for example, play, pause, share, send and delete the file.

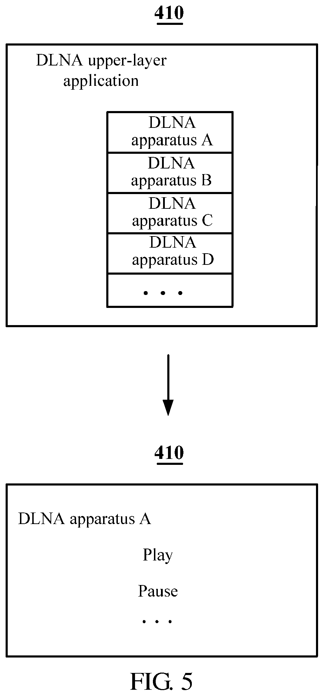

FIG. 5 is a second schematic view illustrating the process of operating a target DLNA apparatus to process a shared file according to the present disclosure. As shown in FIG. 5, the user calls an upper-layer application of a handheld apparatus via the handheld apparatus, and enters a main interface 410 of the upper-layer application; and a DLNA apparatus shortcut list is shown in the main interface 410.

Thereafter, the user enters an operation interface 420 of a target DLNA apparatus by clicking an icon of a target DLNA apparatus in the DLNA apparatus shortcut list. Then, the user can process a shared file that is dragged via the operation interface 420 of the target DLNA apparatus that is displayed on the screen of the handheld apparatus.

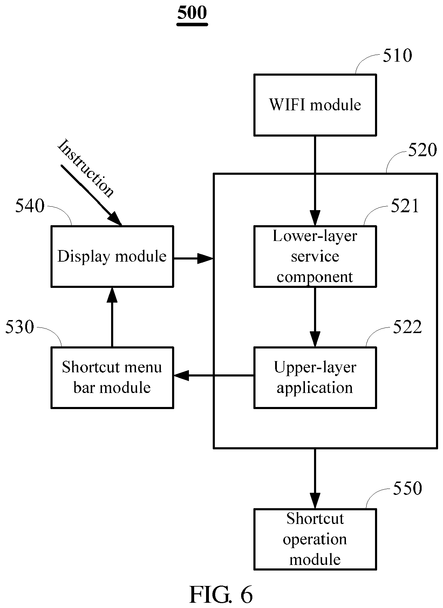

FIG. 6 is a schematic structural view illustrating a handheld apparatus for file sharing according to an embodiment of the present disclosure. As shown in FIG. 6, a handheld apparatus 500 of this embodiment shares a file via the wireless network. The handheld apparatus 500 comprises a WIFI module 510, a DLNA module 520, a shortcut menu bar module 530, a display module 540 and a shortcut operation module 550. The DLNA module 520 consists of a lower-layer service component 521 and an upper-layer application 522.

In this embodiment, the WIFI module 510 is configured to activate a WIFI function to search for and enter a wireless network.

The lower-layer service component 521 is configured to add the handheld apparatus 500 into a DLNA sharing apparatus group in the wireless network, and acquire the DLNA apparatus shortcut list from the wireless network.

The upper-layer application 522 is configured to call the DLNA apparatus shortcut list from the lower-layer service component 521.

The shortcut menu bar module 530 is configured to form a DLNA apparatus list shortcut menu bar according to the DLNA apparatus shortcut list called by the upper-layer application 522; and the display module 540 is configured to display the DLNA apparatus list shortcut menu bar.

The display module 540 is further configured to receive an instruction of dragging the shared file onto an icon of a target DLNA apparatus in the DLNA apparatus shortcut list that is displayed in the form of the DLNA apparatus list shortcut menu bar, and display an animation of the instruction. The DLNA apparatus shortcut list comprises at least one icon of at least one DLNA apparatus.

The DLNA module 520 is configured to match a type of the target DLNA apparatus with a type of the shared file.

The shortcut operation module 550 is configured to enable the target DLNA apparatus to process the shared file if the DLNA module 520 match the type of the target DLNA apparatus with the type of the shortcut file successfully.

It should be appreciated that, working principles and specific operations of the handheld apparatus 500 of this embodiment are the same as those of the embodiment shown in FIG. 1, and thus will not be further described herein.

It should be understood that, in the embodiments provided in the present disclosure, the apparatuses and methods disclosed may also be embodied in other forms. The embodiments of the handheld apparatus described above are only provided for illustration; and the division of modules described only represents a division of logical functions, and there may be other division manners in practical implementations. For example, a number of modules may be combined to form a single module or may be integrated into another system, or some features may be omitted or may not be performed. Furthermore, mutual coupling or communication connections between the modules may be achieved via a plurality of interfaces, or in an electrical way, a mechanical way or some other way.

As integral components of an intelligent terminal, the aforesaid function modules may be or may not be physical units, may be co-located at a same site or be distributed in a plurality of network units, and may be implemented either in the form of hardware or in the form of software function units. The objective of the present disclosure can be achieved by optionally using a part of or all of the modules depending on to the actual need.

According to the above descriptions, the present disclosure can search for DLNA apparatuses that are in a connected status in the DLNA network via the handheld apparatus, display the corresponding DLNA apparatus information in the DLNA apparatus shortcut list, and then drag a file to be shared onto an icon of a corresponding DLNA apparatus in the DLNA apparatus shortcut list, thus achieving the playing or sending of the shared file. The present disclosure can achieve quick sharing of files, and feature simple operations and high accuracy.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A file sharing method, comprising:
after a handheld apparatus entering a DLNA network, acquiring information of available DLNA apparatuses that are in a connected status in the DLNA network by a DLNA module, to form a DLNA apparatus shortcut list (S101);
dragging a shared file onto an icon of a target DLNA apparatus in the DLNA apparatus shortcut list, wherein the DLNA apparatus shortcut list comprises at least one icon of at least one DLNA apparatus (S102);
matching a type of the target DLNA apparatus with a type of the shared file by the DLNA module (S103); and
enabling the target DLNA apparatus to process the shared file by the handheld apparatus if matching successfully (S104);
**characterized in that,** the step of dragging a shared file onto an icon of a target DLNA apparatus in the DLNA apparatus shortcut list, comprises:
dragging the shared file towards a status bar on a screen of the handheld apparatus;
automatically activating an upper-layer application by the DLNA module of the handheld apparatus, to call the DLNA apparatus shortcut list from a lower-layer service component;
displaying the DLNA apparatus shortcut list; and
dragging the shared file onto the icon of the target DLNA apparatus in the DLNA apparatus shortcut list and then releasing, to select the target DLNA apparatus to process the shared file.

2. The file sharing method of claim 1, wherein the step of the handheld apparatus entering the DLNA network comprises:
activating a WIFI function by the handheld apparatus to search for and enter a wireless network; and
activating the upper-layer application by the DLNA module to enter the DLNA network.

3. The file sharing method of claim 1, wherein the step of acquiring information of available DLNA apparatuses that are in a connected status in the DLNA network by the DLNA module to form the DLNA apparatus shortcut list comprises:
adding the handheld apparatus into a DLNA sharing apparatus group in a wireless network by a lower-layer service component of the DLNA module, and acquiring the information of the available DLNA apparatuses that are in a connected status in the DLNA network to form the DLNA apparatus shortcut list.

4. The file sharing method of claim 1, wherein the step of enabling the target DLNA apparatus to process the shared file by the handheld apparatus, comprises:
receiving an instruction of pulling down a status bar by the handheld apparatus, and displaying a handheld apparatus shortcut menu bar according to the instruction;
calling the DLNA apparatus shortcut list from a lower-layer service component by an upper-layer application via clicking an icon of the upper-layer application in the handheld apparatus shortcut menu bar, and displaying the DLNA apparatus shortcut list in the form of a DLNA apparatus list shortcut menu bar;
entering an operation interface of the target DLNA apparatus by clicking the icon of the target DLNA apparatus in the DLNA apparatus shortcut menu bar; and
processing the shared file via the operation interface of the target DLNA apparatus displayed by the handheld apparatus.

5. The file sharing method of claim 1, wherein the step of enabling the target DLNA apparatus to process the shared file by the handheld apparatus, comprises:
calling an upper-layer application by the handheld apparatus and entering a main interface of the upper-layer application, wherein the DLNA apparatus shortcut list is displayed in the main interface;
entering an operation interface of the target DLNA apparatus by clicking the icon of the target DLNA apparatus in the DLNA apparatus shortcut list; and
processing the shared file via the operation interface of the target DLNA apparatus displayed by the handheld apparatus.

6. A handheld apparatus (500) for sharing a file, the handheld apparatus sharing the file via a wireless network, and the handheld apparatus (500) comprising:
a DLNA module (520), being configured to acquire information of available DLNA apparatuses that are in a connected status in the DLNA network to form a DLNA apparatus shortcut list after the handheld apparatus (500) enters a DLNA network;
a display module (540), being configured to display the DLNA apparatus shortcut list and receive an instruction of dragging the shared file onto an icon of a target DLNA apparatus in the DLNA apparatus shortcut list, and display a corresponding animation according to the instruction, wherein the DLNA apparatus shortcut list comprises at least one icon of at least one DLNA apparatus;
the DLNA module (520) is further configured to match a type of the target DLNA apparatus with a type of the shared file; and
a shortcut operation module (550), being configured to enable the target DLNA apparatus to process the shared file after matching successfully;
**characterized in that,** when receiving the instruction of dragging the shared file onto the icon of the target DLNA apparatus in the DLNA apparatus shortcut list, the display module (540) displays the DLNA apparatus shortcut list according an operation of dragging the shared file towards a status bar on a screen of the handheld apparatus (500) so as to automatically activate an upper-layer application (522) by the DLNA module (520) of the handheld apparatus (500) and then call the DLNA apparatus shortcut list from a lower-layer service component (521).

7. The handheld apparatus of claim 6, further comprising a WIFI module (510), wherein the WIFI module (510) is configured to activate a WIFI function to search for and enter a wireless network, and the DLNA module (520) activates an upper-layer application (522) to enter the DLNA network.

8. The handheld apparatus of claim 7, wherein the DLNA module (520) further comprises a lower-layer service component (521), wherein the lower-layer service component (521) is configured to add the handheld apparatus into a DLNA sharing apparatus group in the wireless network, and acquire the DLNA apparatus shortcut list from the wireless network, and the upper-layer application (522) is configured to call the DLNA apparatus shortcut list from the lower-layer service component.

9. The handheld apparatus of claim 8, further comprising a shortcut menu bar module (530), which is configured to form a DLNA apparatus list shortcut menu bar according to the DLNA apparatus shortcut list called by the upper-layer application (522) of the DLNA module (520).

## Patentansprüche

1. Verfahren zum Teilen von Dateien, das die folgenden Schritte umfasst:
nachdem eine tragbare Vorrichtung in ein DLNA-Netzwerk eingegeben ist, Erfassen von Auskünften verfügbarer DLNA-Vorrichtungen, die sich im DLNA-Netzwerk in einem verbundenen Zustand befinden, durch ein DLNA-Modul zum Bilden einer DLNA-Vorrichtungsdirektzugriffliste (S101);
Ziehen einer geteilten Datei auf ein Icon einer DLNA-Zielvorrichtung in der DLNA-Vorrichtungsdirektzugriffliste, wobei die DLNA-Vorrichtungsdirektzugriffliste zu mindestens ein Icon zu mindestens einer DLNA-Vorrichtung umfasst (S102);
Übereinstimmen einer Art der DLNA-Zielvorrichtung mit einer Art der geteilten Datei durch das DLNA-Modul (S103);
Befähigen der DLNA-Zielvorrichtung, die geteilte Datei durch die tragbare Vorrichtung zu verarbeiten, wenn die Übereinstimmung erfolgreich ist (S104);
**dadurch gekennzeichnet, dass** der Schritt des Ziehens einer geteilten Datei auf ein Icon einer DLNA-Zielvorrichtung in der DLNA-Vorrichtungsdirektzugriffliste umfasst:
Ziehen der geteilten Datei zu einer Statuszeile auf einem Bildschirm der tragbaren Vorrichtung;
automatisches Betätigen einer Oberschichtanwendung durch das DLNA-Modul der tragbaren Vorrichtung zum Aufruf der DLNA-Vorrichtungsdirektzugriffliste aus einer Unterschichtdienstkomponente;
Anzeigen der DLNA-Vorrichtungsdirektzugriffliste; und
Ziehen der geteilten Datei auf ein Icon der DLNA-Zielvorrichtung in der DLNA-Vorrichtungsdirektzugriffliste und Loslassen, zur Auswahl der DLNA-Zielvorrichtung zur Verarbeitung des geteilten Datei.

2. Verfahren zum Teilen von Dateien nach Anspruch 1, wobei der Schritt des Eingebens der tragbaren Vorrichtung in das DLNA-Netzwerk umfasst:
Betätigen einer WIFI-Funktion durch die tragbare Vorrichtung zum Suchen eines drahtlosen Netzwerkes und zum Eingeben in dieses; und
Betätigen der Oberschichtanwendung durch das DLNA-Modul zum Eingeben in das des DNLA-Netzwerk.

3. Verfahren zum Teilen von Dateien nach Anspruch 1, wobei der Schritt des Erfassens von Auskünften verfügbarer DLNA-Vorrichtungen, die sich in dem DLNA-Netzwerk in einem verbundenen Zustand befinden, durch ein DLNA-Modul zum Bilden einer DLNA-Vorrichtungsdirektzugriffliste umfasst:
Hinzufügen der tragbaren Vorrichtung in eine DLNA-Teilungsvorrichtungsgruppe in einem drahtlosen Netzwerk durch eine Unterschichtdienstkomponente des DLNA-Moduls, und Erfassen der Auskünfte der verfügbaren DLNA-Vorrichtungen, die sich im DLNA-Netzwerk in einem verbundenen Zustand befinden, zum Bilden der DLNA-Vorrichtungsdirektzugriffliste.

4. Verfahren zum Teilen von Dateien nach Anspruch 1, wobei der Schritt des Befähigens der DLNA-Zielvorrichtung, die geteilte Datei durch die tragbare Vorrichtung zu verarbeiten, umfasst:
Empfangen einer Richtlinie, eine Statuszeile durch die tragbare Vorrichtung herunterzuziehen, und Anzeigen einer Direktzugriffmenüzeile für die tragbare Vorrichtung gemäß der Richtlinie;
Aufrufen der DLNA-Vorrichtungsdirektzugriffliste aus einer Unterschichtdienstkomponente durch eine Oberschichtanwendung über das Klicken auf ein Icon der Oberschichtanwendung in der Direktzugriffmenüzeile für die tragbare Vorrichtung, und Anzeigen der DLNA-Vorrichtungsdirektzugriffliste in Form einer DLNA-Vorrichtungsdirektzugriffmenüzeile;
Eingeben einer Betriebszwischenstelle der DLNA-Zielvorrichtung, indem man auf das Icon der DLNA-Zielvorrichtung in der DLNA-Vorrichtungsdirektzugriffmenüzeile klickt; und
Verarbeiten der geteilten Datei über die Betriebsschnittstelle der DLNA-Zielvorrichtung, die von der tragbaren Vorrichtung angezeigt ist.

5. Verfahren zum Teilen von Dateien nach Anspruch 1, wobei der Schritt des Befähigens der DLNA-Zielvorrichtung, die geteilte Datei durch die tragbare Vorrichtung zu verarbeiten, umfasst:
Aufrufen einer Oberschichtanwendung durch die tragbare Vorrichtung und Eingeben einer Hauptschnittstelle der Oberschichtanwendung, wobei die DLNA-Vorrichtungsdirektzugriffliste in der Hauptschnittstelle angezeigt ist;
Eingeben einer Betriebszwischenstelle der DLNA-Zielvorrichtung, indem man auf das Icon der DLNA-Zielvorrichtung in der DLNA-Vorrichtungsdirektzugriffliste klickt; und
Verarbeiten der geteilten Datei über die Betriebsschnittstelle der DLNA-Zielvorrichtung, die von der tragbaren Vorrichtung angezeigt ist.

6. Tragbare Vorrichtung (500) zum Teilen einer Datei, wobei die tragbare Vorrichtung die Datei über ein drahtloses Netzwerk teilt, und die tragbare Vorrichtung (500) umfasst:
ein DLNA-Modul (520), die konfiguriert ist zum Erfassen von Auskünften verfügbarer DLNA-Vorrichtungen, die sich im DLNA-Netzwerk in einem verbundenen Zustand befinden, zum Bilden einer DLNA-Vorrichtungsdirektzugrifflist, nachdem die tragbare Vorrichtung in ein DLNA-Netzwerk eingegeben ist;
ein Anzeigemodul (540), das zum Anzeigen der DLNA-Vorrichtungsdirektzugriffliste und zum Empfangen einer Richtlinie des Ziehens der geteilten Datei auf ein Icon einer DLNA-Zielvorrichtung in der DLNA-Vorrichtungsdirektzugriffliste und zum Anzeigen einer entsprechenden Animation gemäß der Richtlinie konfiguriert ist, wobei die DLNA-Vorrichtungsdirektzugriffliste zu mindestens ein Icon zu mindestens einer DLNA-Vorrichtung umfasst; wobei das DLNA-Modul (520) weiter zum Übereinstimmen einer Art der DLNA-Zielvorrichtung mit einer Art der geteilten Datei konfiguriert ist; und
ein Direktgriffbetriebsmodul (550), das zum Befähigen der DLNA-Zielvorrichtung, die geteilte Datei zu verarbeiten, nachdem die Übereinstimmung erfolgreich gewesen ist, konfiguriert ist;
**dadurch gekennzeichnet, dass**, wenn das Anzeigemodul (540) die Richtlinie des Ziehens der geteilten Datei auf das Icon der DLNA-Zielvorrichtung in der DLNA-Vorrichtungsdirektzugriffliste empfängt, es die DLNA-Vorrichtungsdirektzugriffliste gemäß einem Vorgang des Ziehens der geteilten Datei zu einer Statuszeile auf einem Bildschirm der tragbaren Vorrichtung (500) anzeigt, damit eine Oberschichtanwendung (522) vom DLNA-Modul (520) der tragbaren Vorrichtung (500) automatisch betätigt wird und dann die DLNA-Vorrichtungsdirektzugriffliste aus einer Unterschichtdienstkomponente (521) aufgerufen wird.

7. Tragbare Vorrichtung nach Anspruch 6, weiter ein WIFI-Modul (510) umfassend, wobei das WIFI-Modul (510) zum Betätigen einer WIFI-Funktion zum Suchen eines drahtlosen Netzwerkes und zum Eingeben in dieses konfiguriert ist, und das DNLA-Modul (520) eine Oberschichtanwendung (522) zum Eingeben in das DLNA-Netzwerk betätigt.

8. Tragbare Vorrichtung nach Anspruch 7, wobei das DLNA-Modul (520) weiter eine Unterschichtdienstkomponente (521) umfasst, wobei die Unterschichtdienstkomponente (521) zum Hinzufügen der tragbaren Vorrichtung in eine DLNA-Teilungsvorrichtungsgruppe in dem drahtlosen Netzwerk, und zum Erfassen der DLNA-Vorrichtungsdirektzugriffliste aus dem drahtlosen Netzwerk konfiguriert ist, und die Oberschichtanwendung (522) zum Aufruf der DLNA-Vorrichtungsdirektzugriffliste aus der Unterschichtdienstkomponente konfiguriert ist.

9. Tragbare Vorrichtung nach Anspruch 8, die weiter eine Direktzugriffmenüzeilemodul (530) umfasst, das zum Bilden einer DLNA-Vorrichtungslistedirektzugriffmenüzeile gemäß der DLNA-Vorrichtungsdirektzugriffliste konfiguriert ist, die von der Oberschichtanwendung (522) des DLNA-Moduls (520) aufgerufen worden ist.

## Revendications

1. Procédé de partage de fichiers, comprenant les étapes suivantes:
après qu'un appareil portatif a été introduit dans un réseau DLNA, acquérir des informations d'appareils DLNA disponibles qui sont à l'état connecté dans le réseau DLNA au moyen d'un module DLNA, afin de former une liste d'accès directs à des appareils DLNA (S101);
faire glisser un fichier partagé sur une icône d'un appareil DLNA ciblé dans la liste d'accès directs à des appareils DLNA, la liste d'accès directs à des appareils DLNA comprenant au moins une icône d'au moins un appareil DLNA (S102);
associer un type d'appareil DLNA ciblé à un type de fichier partagé au moyen du module DLNA (S103); et
permettre à l'appareil DLNA ciblé de traiter le fichier partagé au moyen de l'appareil portatif en cas d'association réussie (S104);
**caractérisé en ce que** l'étape de faire glisser un fichier partagé sur une icône d'un appareil DLNA ciblé dans la liste d'accès directs à des appareils DLNA, comprend:
faire glisser le fichier partagé vers une barre de statut sur un écran de l'appareil portatif;
activer automatiquement une application de couche supérieure au moyen du module DLNA de l'appareil portatif, afin d'appeler la liste d'accès directs à des appareils DLNA à partir d'un composant de service de couche inférieure;
afficher la liste d'accès directs à des appareils DLNA; et
faire glisser le fichier partagé sur l'icône de appareil DLNA ciblé dans la liste d'accès directs à des appareils DLNA et puis lâcher, afin de sélectionner l'appareil DLNA ciblé en vue de traiter le fichier partagé.

2. Procédé de partage selon la revendication 1, dans lequel l'étape d'entrée de l'appareil portatif dans le réseau DLNA comprend :
activer une fonction WIFI au moyen de l'appareil portatif afin de rechercher un réseau sans fil et d'y entrer; et
activer l'application de couche supérieure au moyen du module DLNA afin d'entrer dans le réseau DLNA.

3. Procédé de partage selon la revendication 1, dans lequel l'étape d'acquérir des informations d'appareils DLNA disponibles qui sont à l'état connecté dans le réseau DLNA au moyen d'un module DLNA afin de former une liste d'accès directs à des appareils DLNA comprend:
ajouter l'appareil portatif à un groupe d'appareils de partage DLNA dans un réseau sans fil au moyen d'un composant de service de couche inférieure, et acquérir les informations des appareils DLNA disponibles qui sont à l'état connecté dans le réseau DLNA afin de former la liste d'accès directs à des appareils DLNA.

4. Procédé de partage selon la revendication 1, dans lequel l'étape de permettre à l'appareil DLNA ciblé de traiter le fichier partagé au moyen de l'appareil portatif comprend:
recevoir une instruction de déroulement d'une barre de statut au moyen de l'appareil portatif, et afficher une barre à menu pour accès direct d'appareil portatif selon l'instruction;
appeler la liste d'accès directs à des appareils DLNA à partir d'un composant de service de couche inférieure au moyen d'une application de couche supérieure en cliquant une icône de l'application de couche supérieure dans la barre de menu d'accès direct d'appareil portatif, et afficher la liste d'accès directs à des appareils DLNA sous la forme d'une barre de menu d'accès direct à une liste d'appareils DLNA;
faire entrer une interface opérationnelle de l'appareil DLNA ciblé en cliquant sur l'icône de l'appareil DLNA ciblé dans la barre de menu d'accès direct à des appareils DLNA; et
traiter le fichier partagé par l'intermédiaire de l'interface opérationnelle de l'appareil DLNA ciblé affichée par l'appareil portatif.

5. Procédé de partage selon la revendication 1, dans lequel l'étape de permettre à l'appareil DLNA ciblé de traiter le fichier partagé au moyen de l'appareil portatif comprend:
appeler une application de couche supérieure au moyen de l'appareil portatif et entrer dans une interface principale de l'application de couche supérieure, la liste d'accès directs à des appareils DLNA étant affichée dans l'interface principale;
faire entrer une interface opérationnelle de l'appareil DLNA ciblé en cliquant sur l'icône de l'appareil DLNA ciblé dans la liste d'accès directs à des appareils DLNA; et
traiter le fichier partagé par l'intermédiaire de l'interface opérationnelle affichée par l'appareil portatif.

6. Appareil portatif (500) de partage d'un fichier, l'appareil portatif partageant le fichier par l'intermédiaire d'un réseau sans fil, et l'appareil portatif (500) comprenant:
un module DLNA (520) étant configuré pour acquérir des informations d'appareils DLNA disponibles qui sont à l'état connecté afin de former une liste d'accès directs à des appareils DLNA après que l'appareil portatif est entré dans un réseau DLNA;
un module d'affichage (540) étant configuré pour afficher la liste d'accès directs à des appareils DLNA et pour recevoir une instruction de faire glisser le fichier partagé sur l'icône de l'appareil DLNA ciblé dans la liste d'accès directs à des appareils DLNA, et pour afficher une animation correspondante selon l'instruction, la liste d'accès directs à des appareils DLNA comprenant au moins une icône d'au moins un appareil DLNA;
le module DLNA (520) étant configuré en outre pour associer un type d'appareil DLNA ciblé à un type de fichier partagé; et
un module opérationnel d'accès direct (550) étant configuré pour permettre à l'appareil DLNA ciblé de traiter le fichier partagé après une association réussie;
**caractérisé en ce que**, lors de la réception de l'instruction de faire glisser le fichier partagé sur l'icône de l'appareil DLNA ciblé dans la liste d'accès directs à des appareils DLNA, le module d'affichage (540) affiche la liste d'accès directs à des 'appareils DLNA selon une opération consistant à faire glisser le fichier partagé vers une barre de statut sur un écran de l'appareil portatif (500) de façon à activer automatiquement une application de couche supérieure (522) au moyen du module DLNA (520) de l'appareil portatif (500) et ensuite à appeler la liste d'accès directs à des appareils DLNA à partir d'un composant de service de couche inférieure (521).

7. Appareil portatif de partage d'un fichier selon la revendication 6, comprenant en outre un module WIFI (510), dans lequel le module WIFI (510) est configuré pour activer une fonction WIFI afin de rechercher un réseau sans fil et d'y entrer, et le module DLNA (520) active une application de couche supérieure (522) afin d'entrer dans le réseau DLNA.

8. Appareil portatif de partage d'un fichier selon la revendication 7, dans lequel le module DLNA (520) comprend en outre un composant de service de couche inférieure (521), où le composant de service de couche inférieure (521) est configuré pour ajouter l'appareil portatif à un groupe d'appareils de partage DLNA dans le réseau sans fil, et pour acquérir la liste d'accès directs à des appareils DLNA à partir du réseau sans fil, et l'application de couche supérieure (522) est configurée pour appeler la liste d'accès directs à des appareils DLNA à partir du composant de service de couche inférieure.

9. Appareil portatif de partage d'un fichier selon la revendication 8, comprenant en outre un module de barre de menu d'accès direct (530), qui est configuré pour former une barre de menu d'accès direct à une liste d'appareils DLNA selon la liste d'accès directs à des appareils DLNA appelée par l'application de couche supérieure (522) du module DLNA (520).
